# EUROPÄISCHE PATENTSCHRIFT

(11) **EP 0 844 125 B1**
(45) Veröffentlichungstag und Bekanntmachung des Hinweises auf die Patenterteilung: **10.10.2001**
(21) Anmeldenummer: 97119317.2
(22) Anmeldetag: 05.11.1997
(51) Int. Cl.: B60J 7/14

(54) **Cabriolet-Fahrzeug**
Convertible vehicle.
Véhicule convertible.

(30) Priorität: 23.11.1996 DE 29620468 U
(43) Veröffentlichungstag der Anmeldung: 27.05.1998
(73) Patentinhaber: Wilhelm Karmann GmbH, D-49084 Osnabrück (DE)
(72) Erfinder: Rothe, Karl, 49565 Bramsche (DE); Licher, Siegfried, 49124 Georgmarienhütte (DE)
(74) Vertreter: Busse & Busse Patentanwälte

(56) Entgegenhaltungen:
- FR-A- 796 175
- US-A- 2 812 975
- US-A- 3 575 464

## Beschreibung

Die Erfindung betrifft ein Cabriolet-Fahrzeug gemäß dem Oberbegriff des Anspruches 1, dessen Dach mit einer in eine Öffnungsstellung verlagerbaren Dachschale versehen ist.

Bei einem bekannten Cabriolet-Fahrzeug dieser Art (US-A-3 575 464) ist zwischen einem vorderen Windschutzscheibenrahmen und einem rückwärtigen Dachbereich eine im wesentlichen waagerecht in der Dachkontur verlaufende Dachschale mit zwei Teilstücken vorgesehen, die in Schließstellung den Fahrzeuginnenraum abdecken. Der rückwärtige Dachbereich ist als unabhängig von den vorderen Teilstücken klappbares drittes Teilstück ausgebildet, unter das die beiden Teilstücke in Öffnungsstellung in einer waagerechten Übereinanderlage eingeschwenkt werden. Diese aufwendige Dachkonstruktion weist drei bewegliche Dach-Teilstücke auf, die einen nachteilig großen Ablageraum in der Öffnungsstellung erfordern.

Der Erfindung liegt die Aufgabe zugrunde, ein Cabriolet-Fahrzeug der eingangs genannten Art zu schaffen, dessen auch für eine vergrößerte Dachöffnung eines viersitzigen Fahrzeugs geeignete Dachschalen-Konstruktion eine automatische Verlagerung in die Öffnungs- oder Schließstellung mit geringem technischen Aufwand und auf platzsparend engem Bewegungs- und Ablageraum derart ermöglicht, daß mit hoher Zuverlässigkeit eine insgesamt benutzerfreundliche Handhabung erreicht ist.

Die Erfindung löst diese Aufgabe für ein Cabriolet-Fahrzeug mit einer Dachkonstruktion mit den Merkmalen des Anspruches 1. Hinsichtlich wesentlicher weiterer Ausgestaltungsmerkmale wird auf die Ansprüche 2 bis 18 verwiesen.

Das erfindungsgemäß ausgebildete Cabriolet-Fahrzeug weist im Bereich einer den im wesentlichen waagerechten Teil der Dachkontur bildenden Dachschale zwei Dach-Teilstücke auf, die über jeweilige randseitige Gelenkverbinder zu einer Baueinheit derart verbunden sind, daß nach einem automatischen Öffnungsvorgang der Fahrzeuginnenraum im Bereich der Dachkontur freigegeben wird, das Cabriolet-Fahrzeug auch in einer viersitzigen Ausführung ohne zeitaufwendige Handbedienung von Dachteilen mit geöffnetem Dach gefahren werden kann und dieses danach im wesentlichen ohne Beeinträchtigung der Insassen schnell verschließbar ist.

Die beiden Dach-Teilstücke wirken dabei mit zwei symmetrisch zur Fahrzeuglängsachse angreifenden Antriebseinheiten zusammen, deren jeweils im seitlichen Karosserierandbereich unterhalb des rückwärtigen Dachbereiches angeordnete Bauteile auf engem Bewegungsraum so verlagerbar sind, daß die beiden Dach-Teilstücke aus ihrer gemeinsam die Dachkontur bildenden Schließstellung in eine platzsparend dichte Packstellung hinter die Fondsitze abgesenkt werden können. Dabei durchlaufen die beiden Dach-Teilstücke in einer ersten Bewegungsphase beim Öffnungsvorgang gegensinnig zur Fahrtrichtung verlaufende Schwenkkurven, die eine Hintereinanderlage der hochgeschwenkten Dach-Teilstücke bewirken. Danach werden die beiden Dach-Teilstücke über eine im wesentlichen vertikal verlaufende Absenkbewegung aus dieser ersten Öffnungsstellung in die Packstellung überführt.

Bei dieser Öffnungs- und Schließkinematik der Dachbaugruppe ist im Fahrzeuginnenraum eine hinreichende Kopffreiheit für die Insassen gewährleistet. Die Stellhöhe des Cabriolet-Daches kann mit der zweiteiligen Dachschalen-Konstruktion so bemessen werden, daß auch unter beengten Platzverhältnissen eine sichere und belastungsoptimierte Bewegung der Dachteile in die jeweilige Öffnungs- bzw. Schließstellung möglich ist. Die beiden Dach-Teilstücke werden bei deren Verstellung vorteilhaft synchron so bewegt, daß sich deren Gewichtsschwerpunkt in jeder Bewegungsphase im Nahbereich der Verbindungsgelenke der Antriebsbaugruppe befindet und damit punktuelle Überbelastungen auch bei einer für ein viersitziges Fahrzeug vergrößerten Gesamtkonstruktion vermieden sind.

Weitere Einzelheiten und Vorteile der Erfindung ergeben sich aus der nachfolgenden Beschreibung und den Zeichnungen, die ein Ausführungsbeispiel des erfindungsgemäßen Cabriolet-Fahrzeugs veranschaulichen. In der Zeichnung zeigen:
- Fig. 1: eine Seitenansicht eines Cabriolet-Fahrzeuges mit einer sich zwischen einem rückwärtigen Dachbereich und einem vorderen Windschutzscheibenrahmen erstreckenden Dachschale mit zwei Dach-Teilstücken,
- Fig. 2: eine Draufsicht des Cabriolet-Fahrzeuges gemäß Fig. 1 mit jeweils randseitig an den Dach-Teilstücken angreifenden Antriebseinheiten in einer ersten Ausführung,
- Fig. 3 und Fig. 4: eine jeweilige Seitenansicht des Cabriolet-Fahrzeugs mit den beiden Dach-Teilstücken in unterschiedlichen Bewegungsphasen beim Öffnungsvorgang,
- Fig. 5: eine teilweise geschnittene Seitenansicht des Cabriolet-Fahrzeugs gemäß Fig. 1 mit der Antriebseinheit in Schließstellung,
- Fig. 6: eine vergrößerte Ausschnittsdarstellung der Antriebseinheit im Bereich eines am hinteren Dach-Teilstück befindlichen Schwenkantriebs in Schließstellung,
- Fig. 7: eine Seitenansicht des Schwenkantriebes gemäß Fig. 6 in einer Schwenkstellung beim Öffnungs- bzw. Schließvorgang,
- Fig. 8: eine Seitenansicht der Antriebseinheit im Bereich eines diese karosserieseitig abstützenden Hauptlagers,
- Fig. 9: eine Schnittdarstellung des Hauptlagers gemäß einer Linie IX - IX in Fig. 8,
- Fig. 10: eine Schnittdarstellung im Bereich des Schwenkantriebes gemäß einer Linie X - X in Fig. 11,
- Fig. 11: eine Schnittdarstellung im Bereich der Antriebseinheit gemäß einer Linie XI - XI in Fig. 5,
- Fig. 12: eine Schnittdarstellung im Bereich des Schwenkantriebs gemäß einer Linie XII - XII in Fig. 6,
- Fig. 13: eine Perspektivdarstellung der Antriebseinheiten mit den in Schließstellung befindlichen Dachteilstücken in einer zweiten Ausführung,
- Fig. 14 bis Fig. 17: jeweilige Seitenansichten der Antriebseinheiten mit einer freitragenden Stützbaugruppe in unterschiedlichen Bewegungsphasen, und
- Fig. 18: eine Seitenansicht der Stützbaugruppe mit einem im Bereich des Absenkantriebs vorgesehenen Dämpfungselement.

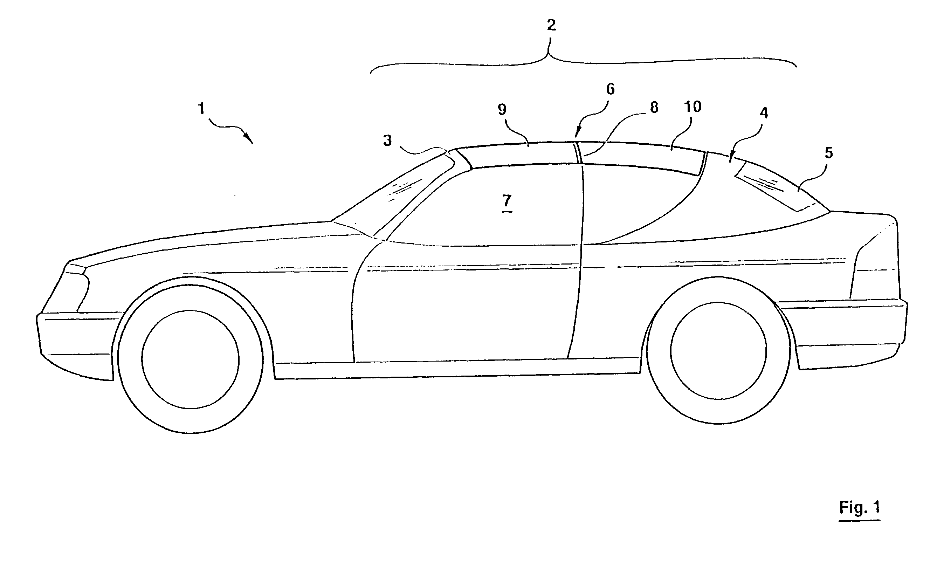

In Fig. 1 ist ein insgesamt mit 1 bezeichnetes Kraftfahrzeug in einer Seitenansicht dargestellt, dessen Dach 2 nach Art eines Cabriolet-Fahrzeugs ausgebildet ist. Das Dach 2 weist dabei eine sich zwischen einem Windschutzscheibenrahmen 3 und einem hinteren Dachbereich 4 mit einer Heckscheibe 5 erstreckende mittlere Dachschale 6 auf, die in eine Öffnungsstellung so verlagerbar ist, daß der Fahrzeuginnenraum 7 im Bereich der Dachkontur zwischen dem Windschutzscheibenrahmen 3 und dem vorzugsweise als ein festes Karosserieteil ausgebildeten Dachbereich 4 freigegeben wird.

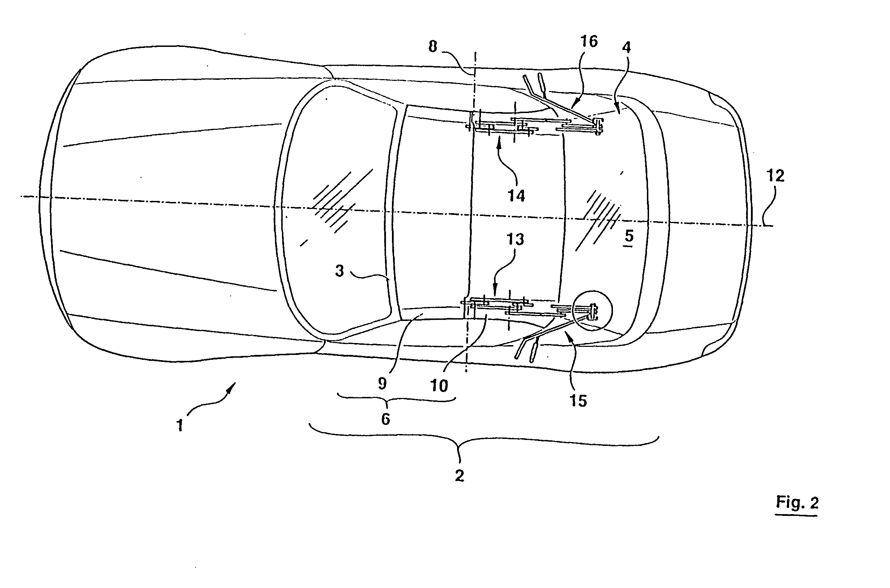

In erfindungsgemäßer Ausbildung besteht die Dachschale 6 des Cabriolet-Fahrzeugs 1 aus zwei im Bereich einer Teilungsebene 8 aneinanderliegenden Dach-Teilstücken 9 und 10. Diese Dach-Teilstücke 9, 10 sind über symmetrisch zu einer Fahrzeuglängsachse 12 (Fig. 2) angeordnete und jeweils randseitig angreifende Gelenkverbinder 13, 14 verbunden, die ihrerseits mit jeweiligen am hinteren Dachteilstück 10 angreifenden Antriebseinheiten 15, 16 zusammenwirken. Im folgenden Beschreibungsteil ist jeweils die Dachkonstruktion in Seitenansicht erläutert, wobei es sich versteht, daß bei symmetrischer Anordnung nur auf eine der randseitigen Baugruppen bezug genommen ist.

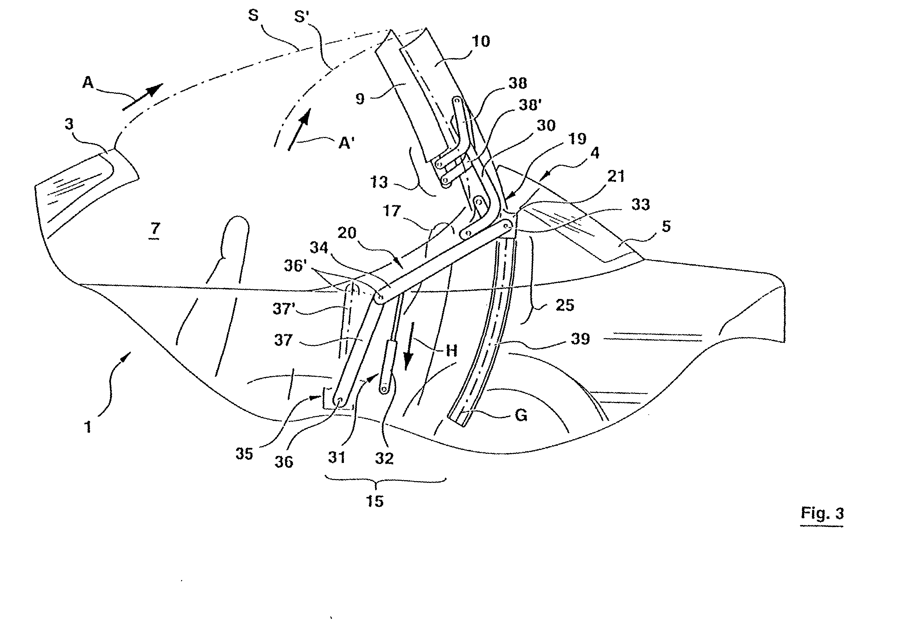

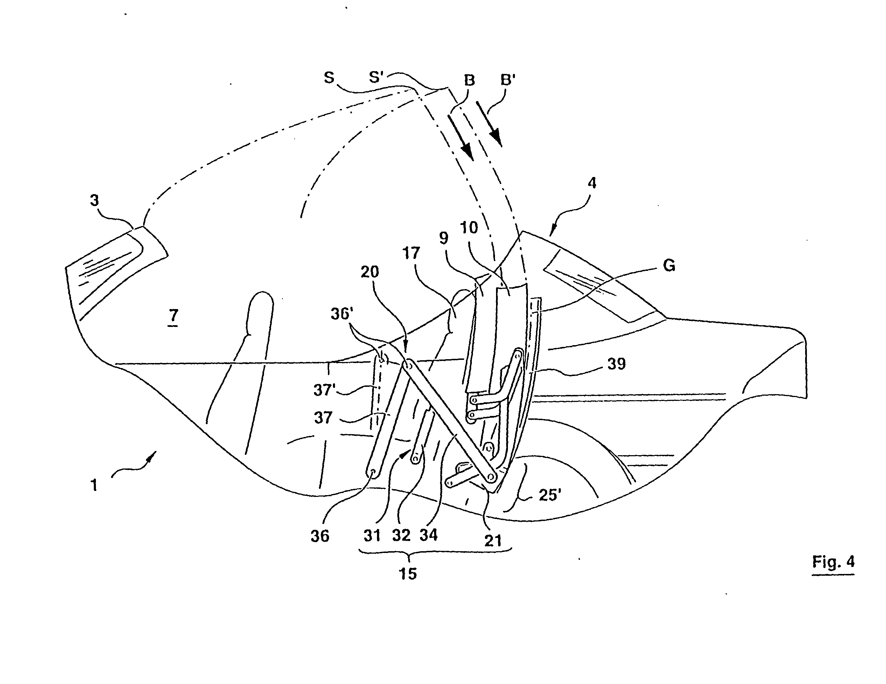

Die in Fig. 3 und Fig. 4 dargestellten Bewegungsphasen beim Öffnungsvorgang der beiden Dach-Teilstücke 9, 10 verdeutlichen deren Schwenkbewegung entgegen der Fahrtrichtung bis in eine annähernd vertikale Stellung (Pfeil A, A') und danach werden die beiden Dach-Teilstücke 9, 10 in Richtung einer mit Pfeilen B, B' verdeutlichten Bewegung in eine Packstellung hinter die Fondsitze 17 in den Fahrzeuginnenraum 7 abgesenkt (Fig. 4).

Die Öffnungsbewegung gemäß Fig. 3 erfolgt für die beiden Dach-Teilstücke 9, 10 über einen automatischen Stellvorgang weitgehend synchron, wobei einerseits das vordere Dach-Teilstück 9 vom Windschutzscheibenrahmen 3 und andererseits das hintere Dachteilstück 9 in der Teilungsebene 8 gelöst werden, die beiden Dach-Teilstücke bis in die annähernde Vertikalstellung zu einer parallelen Hintereinanderlage hochgeschwenkt werden und danach in dieser Stellung die gleichzeitige Absenkung in die Packstellung erfolgt. Ebenso ist denkbar, die beiden Dach-Teilstücke 9, 10 unter Beibehaltung ihrer Verbindungsstellung in der Teilungsebene 8 gleichzeitig bis in die vertikale Stellung hochzuschwenken und danach über eine veränderte Bewegungssteuerung eine zeitversetzte Positionierung in der Hintereinanderlage bzw. der Packstellung zu erreichen.

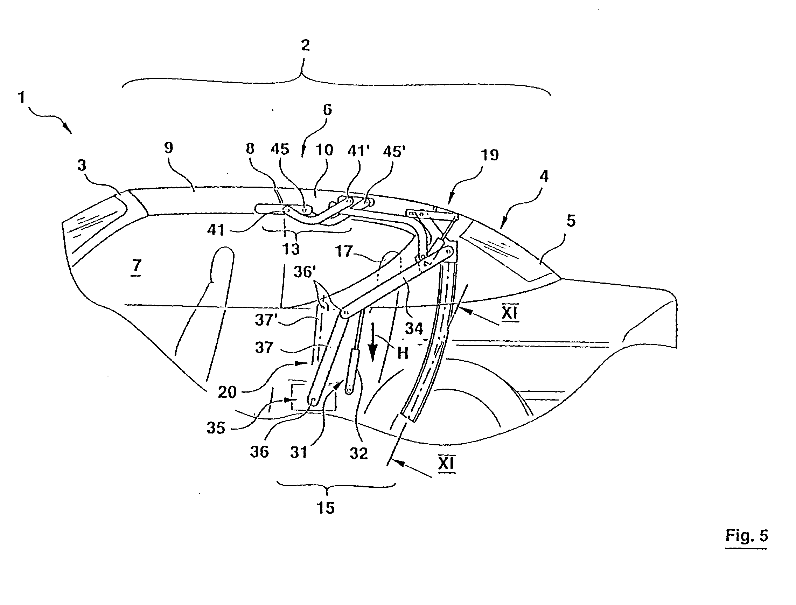

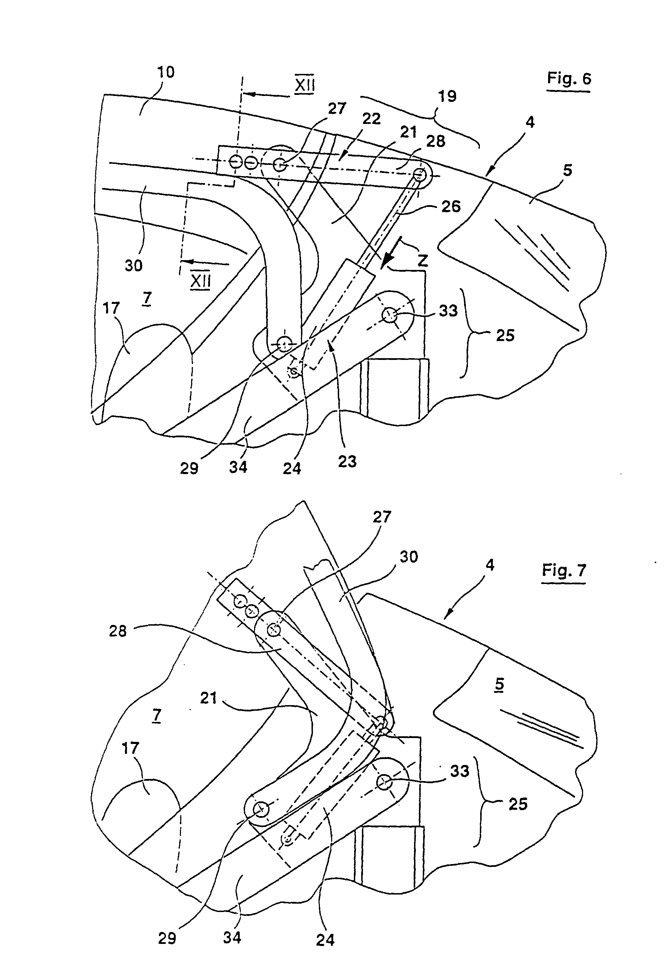

Die vergrößerte Ausschnittsdarstellung gemäß Fig. 5 verdeutlicht in Zusammenschau mit den Ausschnittsdarstellungen gemäß Fig. 6 und 7 die Ausbildung der Antriebseinheit 15 für die beiden Dach-Teilstücke 9, 10, wobei die Antriebseinheit 15 mit einem im Nahbereich des hinteren Dach-Teilstückes 10 befindlichen Schwenkantrieb 19 und einem karosserieseitig abgestützten Absenkantrieb 20 versehen ist. Mit diesen zwei Antriebsbaugruppen kann beim Öffnungs- bzw. Schließvorgang die Bewegung der beiden Dach-Teilstücke 9, 10 so gesteuert werden, daß diese auf zwei den Fahrzeuginnenraum 7 weitgehend unbeeinflußt belassenden Schwenkbahnen S, S' (Fig. 4) verlagerbar sind und mit hoher Wiederholgenauigkeit eine sichere Bedienung möglich ist. In zweckmäßiger Ausführung können die Bauteile des Schwenkantriebes 19 beim Öffnungsvorgang (Fig. 3, Fig. 4) in Richtung zum Absenkantrieb 20 hin so verlagert werden, daß in der Öffnungsstellung (Fig. 4) der hintere Dachbereich 4 von zusätzlichen Stützverbindungsteilen weitgehend frei ist und die im Fahrzeuginnenraum 7 hinter den Fondsitzen 17 befindlichen Bauteile des Cabriolet-Daches 2 von den seitlichen Karosserieteilen so abgedeckt sind, daß eine optisch ansprechende Ansicht des Fahrzeugs 1 erreicht ist.

In Fig. 6 ist die Schließstellung des am rückwärtigen Dach-Teilstück 10 angreifenden Schwenkantriebes 19 veranschaulicht, wobei dieser mit einem Stützlagerteil 21 ausgebildet ist, an dem sowohl ein jeweils zum hinteren Dach-Teilstück 10 hin gerichtete Antriebsgestängeteile 22 aufweisendes Antriebsorgan 23 in Form eines Hydraulikzylinders 24 als auch eine das Stützlagerteil 21 bei der Absenkbewegung (Fig. 4) abstützende Führungsbaugruppe 25 vorgesehen sind.

Der als Antriebsorgan 23 vorgesehene Hydraulikzylinder 24 greift mit seiner Kolbenstange 26 an einem mit dem hinteren Dach-Teilstück 10 verbundenen und am Stützlagerteil 21 ein Schwenkgelenk 27 bildenden Umlenkhebel 28 derart an, daß bei Einleitung einer Zugbewegung (Pfeil Z) am Hydraulikzylinder 24 eine Schwenkbewegung des starren Dach-Teilstücks 10 um das Schwenkgelenk 27 eingeleitet wird (Fig. 7) und diese Bewegung nach Art einer Zwangssteuerung mit dem vorderen Dach-Teilstück 9 über den Gelenkverbinder 13 gekoppelt ist.

In zweckmäßiger Ausführung ist zur Übertragung dieser Schwenkbewegung am Stützlagerteil 21 eine von einem Verbindungsgelenk 29 zu dem Gelenkverbinder 13 der beiden Dach-Teilstücke 9, 10 hin verlaufende Winkelstrebe 30 vorgesehen, so daß die in Fig. 3 dargestellte synchrone Schwenkbewegung der beiden Dach-Teilstücke 9, 10 mittels des vorbeschriebenen Schwenkantriebes 19 nach Art einer Zwangssteuerung erfolgen kann. Das hintere Dach-Teilstück 10 schwenkt dabei unter Wirkung der Stellbewegung Z am Antrieb 23 um das Schwenkgelenk 27 und über das als starre Baugruppe wirksame hintere Dach-Teilstück 10 sowie die Winkelstrebe 30 werden die Gestängebauteile 38 und 38' des Gelenkverbinders 13 so bewegt, daß das vordere Dachteilstück 9 synchron zum ersten Abschnitt der Bewegungsbahn S' des Teilstückes 10 auf der Bahn S bewegt wird und nach Durchlaufen dieser Bahnabschnitte S, S' die beiden Teilstücke in ihrer annähernden Vertikalstellung die Hintereinanderlage (Fig. 3) aufweisen. Die Winkelstrebe 30 ist dabei auch als ein zur Stabilisierung dieser Steuerbewegung beitragendes Bauteil ausgebildet. Gleichzeitig ist der Gelenkverbinder 13 mit seinen Gestängebauteilen 38, 38' und jeweiligen Gelenkpunkten 41, 41' und 45, 45' (Fig. 5) als ein steuerbares Viergelenk wirksam, das im seitlichen Randbereich der Dach-Teilstücke 9, 10 raumsparend angeordnet ist und eine konstruktiv einfache Steuerung ermöglicht.

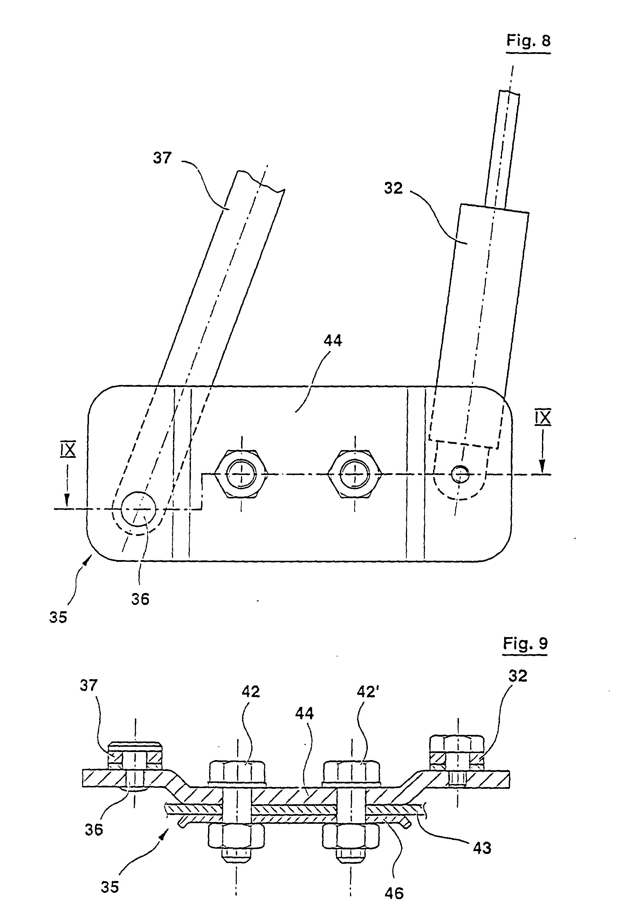

Nach dem vorbeschriebenen Bewegungsablauf im Bereich des Schwenkantriebes 19 kann nunmehr ein am Absenkantrieb 20 als Antriebsorgan 31 vorgesehener Hydraulikzylinder 32 wirksam werden (Fig. 4), wobei dieser einerseits am Stützlagerteil 21 über eine mit der Führungsbaugruppe 25 ein gemeinsames Schwenkgelenk 33 bildende Schwingstange 34 angreift und die Schwingstange 34 andererseits an einem Karosseriehauptlager 35 (Fig. 8) in einem Schwenkgelenk 36 abgestützt ist. In zweckmäßiger Ausführung kann zwischen diesem Schwenkgelenk 36 und der Schwingstange 34 zusätzlich eine an dieser angelenkte Schwenkstütze 37 vorgesehen sein, die im Bereich eines Kniegelenkes 36' in eine Totpunktstellung 37' verlagerbar ist und damit die Antriebseinheit 15 und die Dach-Teilstücke 9, 10 in der Schließstellung derart aussteift (Fig. 5), daß ungewollte Bauteilbewegungen des Daches 2 sicher vermieden sind.

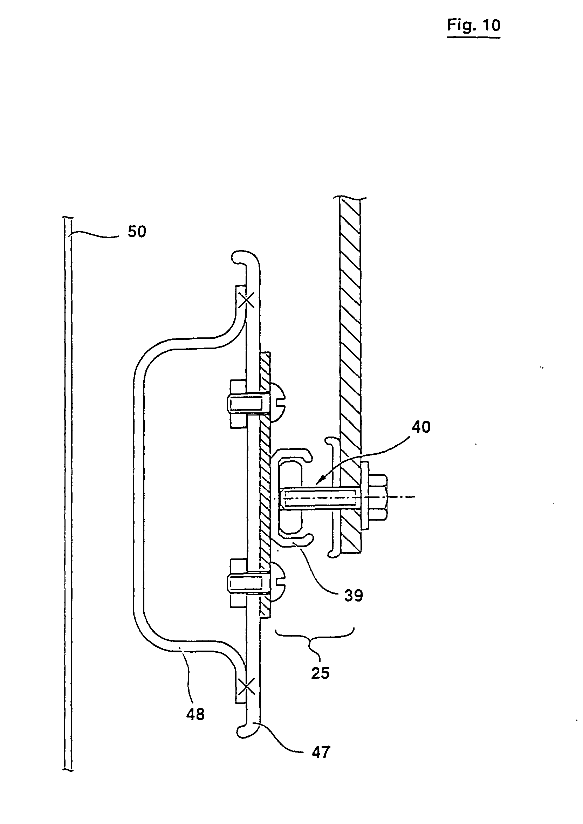

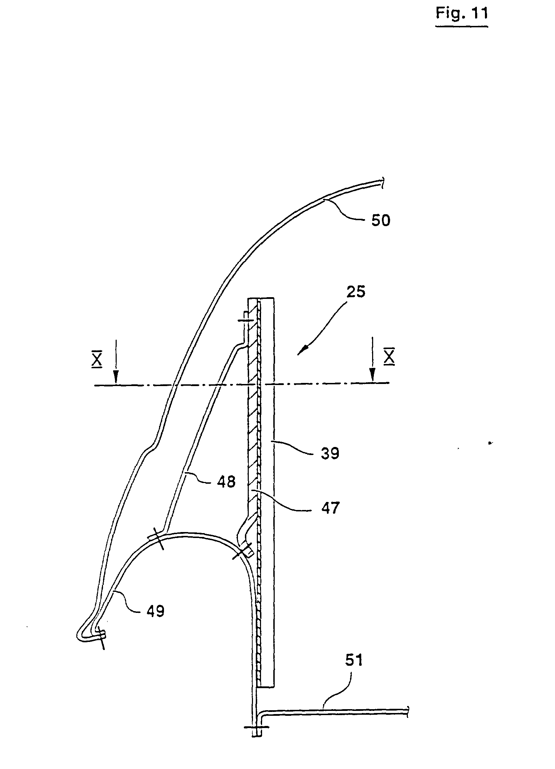

Bei Einleitung einer Zugbewegung H im Bereich des Hydraulikzylinders 32 werden die Dach-Teilstücke 9, 10 gemeinsam mit den Bauteilen im Bereich des Stützlagerteiles 21 über die Führungsbaugruppe 25 aus der oberen Vertikalstellung (Fig. 3) in die Absenkstellung (Fig. 4) geführt. Die Führungsbaugruppe 25 ist dabei in zweckmäßiger Ausbildung mit einer sich im heckseitigen Karosseriebereich erstreckenden Führungsprofilstrebe 39 (Fig. 10, Fig. 11) versehen, die mit einem vom Stützlagerteil 21 im Bereich des Schwenkgelenks 33 abragenden Gegenglied 40 nach Art einer Kulissenführung derart zusammenwirkt, daß die Dachbaugruppe und die Bauteile des Schwenkantriebes 19 gemeinsam auf einer Bewegungsbahn G in die Absenkstellung (Fig. 4) und aus dieser zurück in die Schließstellung (Fig. 5) zwangsgeführt wird.

In Fig. 8 und Fig. 9 sind die Bauteile im Bereich des karosserieseitigen Hauptlagers 35 zur Abstützung des Absenkantriebes 20 bzw. der Schwenkstütze 37 und des Hydraulikzylinders 32 näher veranschaulicht, wobei in zweckmäßiger Auführung jeweilige Schraubverbindungen 42, 42' mit einem Versteifungsteil 46 zur Abstützung einer Hauptlagerplatte 44 an einem Seitenteil 43 der Fahrzeugkarosserie vorgesehen sind.

In der Schnittdarstellung gemäß Fig. 11 ist die Führungsprofilstrebe 39 der Führungsbaugruppe 25 mit einem Stützverbinder 47 verdeutlicht, der über einen Stabilisierungsteil 48 zum Radkasten 49 bzw. einem seitlichen Karosserieteil 50 und einem Bodenteil 51 hin abgestützt ist.

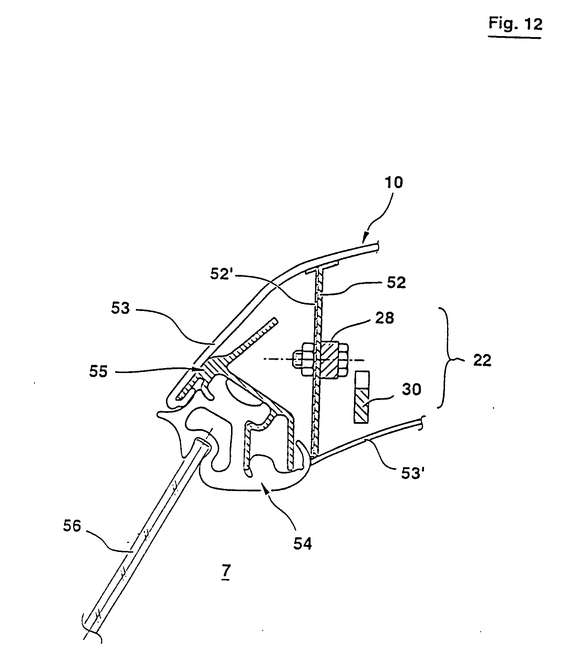

Die Schnittdarstellung gemäß Fig. 12 verdeutlicht den Verbindungsbereich zwischen dem hinteren Dach-Teilstück 10 und den Bauteilen des Schwenkantriebes 19 gemäß einer Linie XII - XII in Fig. 6, wobei das Antriebsgestänge 22 mit dem hinteren Dach-Teilstück 10 im Bereich des Umlenkhebels 28 an einem Halteblech 52 mit einem Verstärkungsteil 52' festgelegt ist. Eine jeweils oberhalb einer Innenverkleidung 53' befindliche Außenhaut 53 des Dach-Teilstückes 10 übergreift dabei eine über ein Verbindungsprofilteil 55 festgelegte Dachrahmendichtung 54 im Bereich einer Seitenscheibe 56.

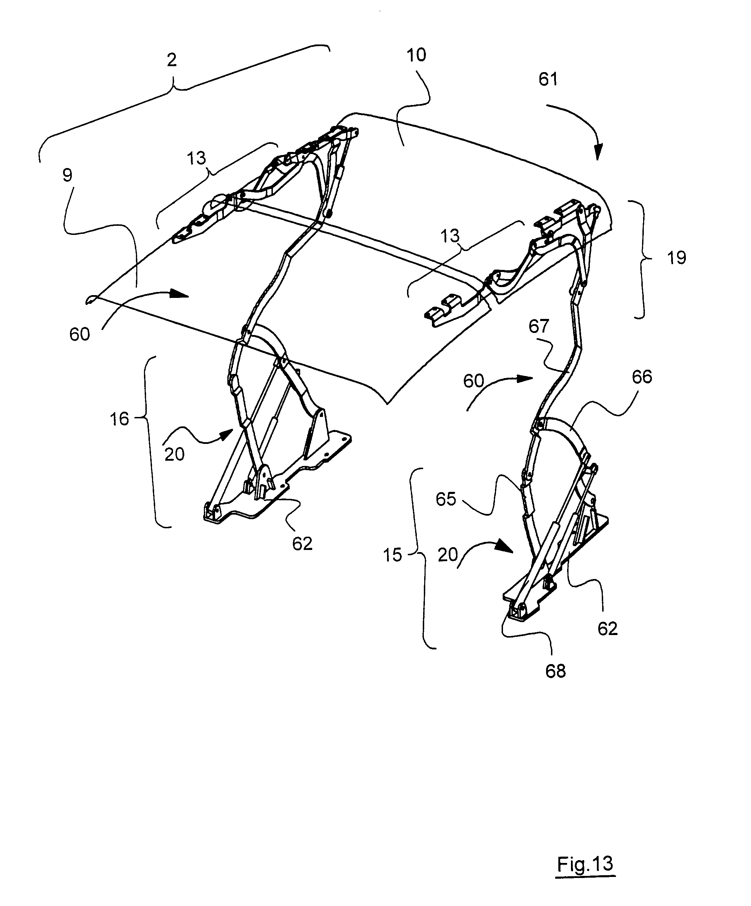

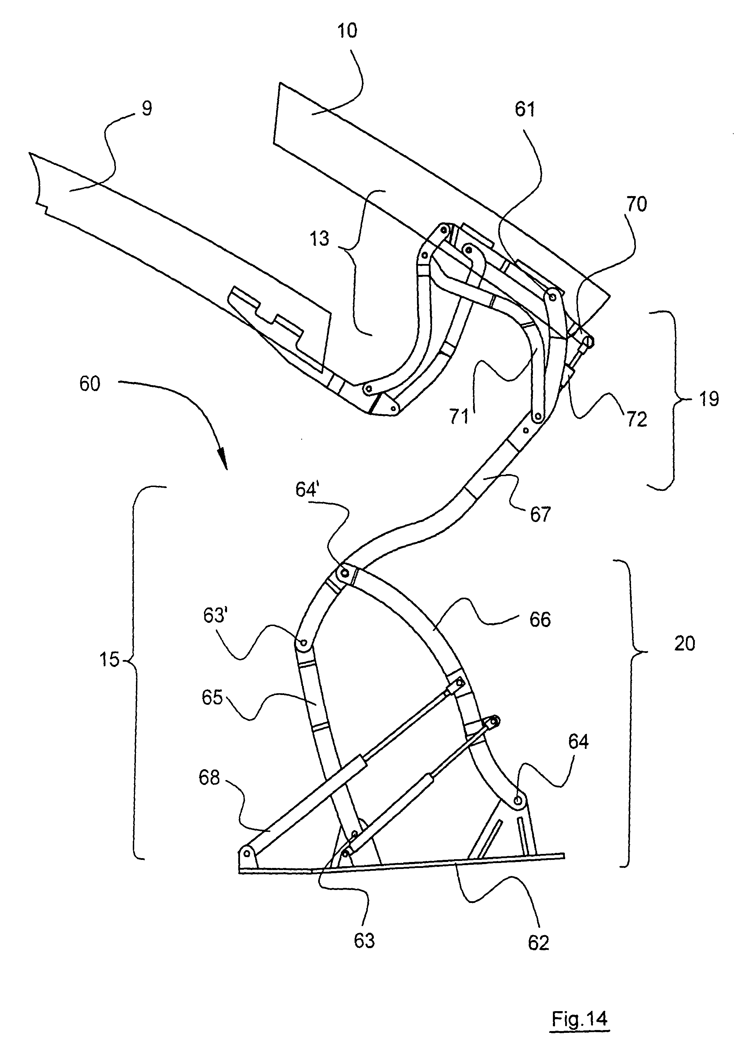

In Fig. 13 ist in einer perspektivischen Ansicht eine zweite Ausführungsform des erfindungsgemäßen Daches 2 dargestellt, wobei dieses im Bereich des symmetrisch zur Fahrzeugslängsachse 12 angeordneten Antriebseinheiten 15 und 16 mit einer jeweiligen freitragenden Stützbaugruppe 60 versehen ist (Fig. 14), die mit der Gelenkverbinder-Baugruppe 13 der Dachteile 9,10 zusammenwirken. Im Bereich des dachseitigen Schwenkantriebes 19 greift die Stützbaugruppe 60 über ein Hauptschwenklager 61 am hinteren Dach-Teilstück 10 an und anderenends ist der Absenkantrieb 20 vorgesehen, dessen Wirkrichtung bei der Schließbewegung des Daches 2 umkehrbar ist.

Die Stützbaugruppe 60 ist mit einem karosseriefesten Halteteil 62 versehen, an dem eine Führungsschwinge 65 und eine Antriebsschwinge 66 über jeweilige Gelenkverbinder 63, 64 abgestützt sind. Die Führungsschwinge 65 und die Antriebsschwinge 66 sind anderenends an einer mit den Dachteilen 9 und 10 im Bereich des Schwenkantriebs 19 verbundenen Stützschwinge 67 angelenkt (Gelenkverbinder 63', 64'), die eine für eine raumsparende Schwenkbewegung und stabile Belastungsaufnahme optimierte Längskontur mit Bogenformungen aufweist.

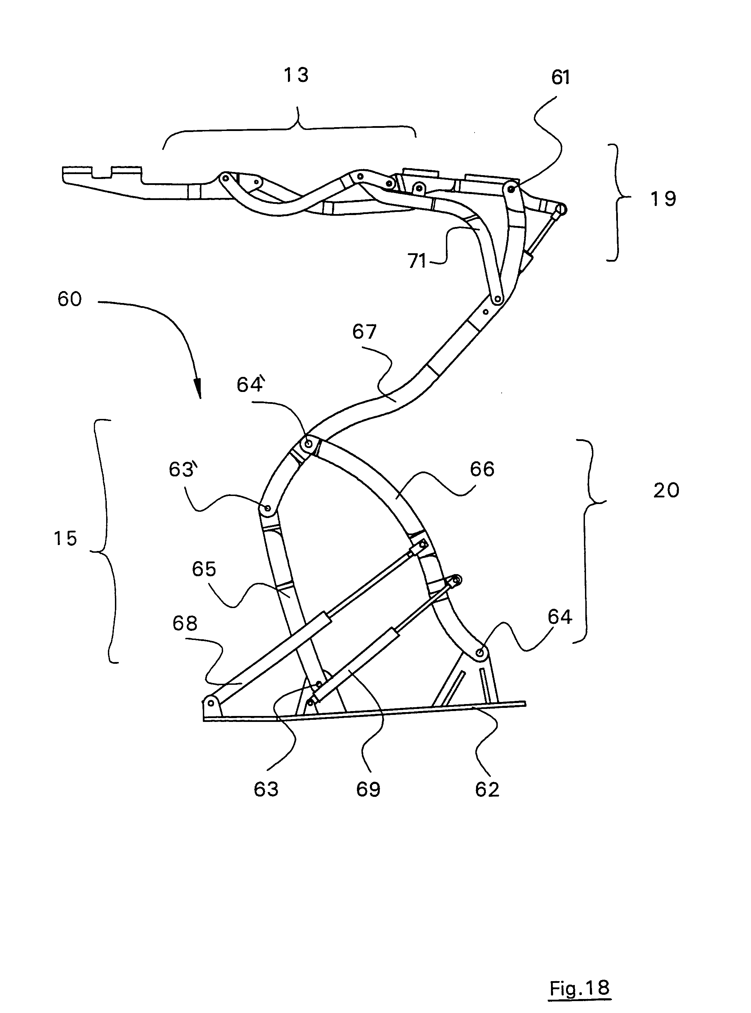

Im Bereich des karosseriefesten Halteteils 62 ist als Antriebsorgan ein im wesentlichen mittig an der S-förmig gekrümmten Antriebsschwinge 66 angreifender Hydraulikzylinder 68 vorgesehen, in dessen Bereich ein in Fig. 18 dargestellter und sich im wesentlichen parallel zum Antriebszylinder 68 erstreckendes Dämpfungselement in Form einer Gasdruckfeder 69 vorgesehen sein kann, mit der eine Abfederung von bei Bewegung der Dachbaugruppe wirksamen Gewichtskräften erreicht wird.

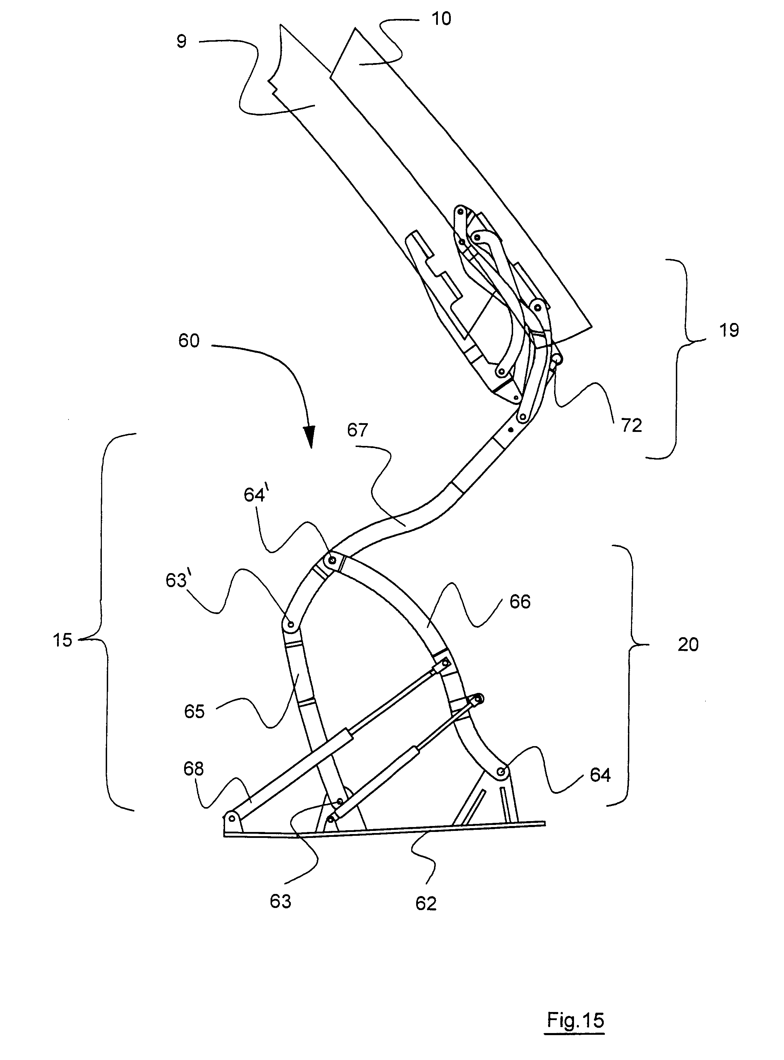

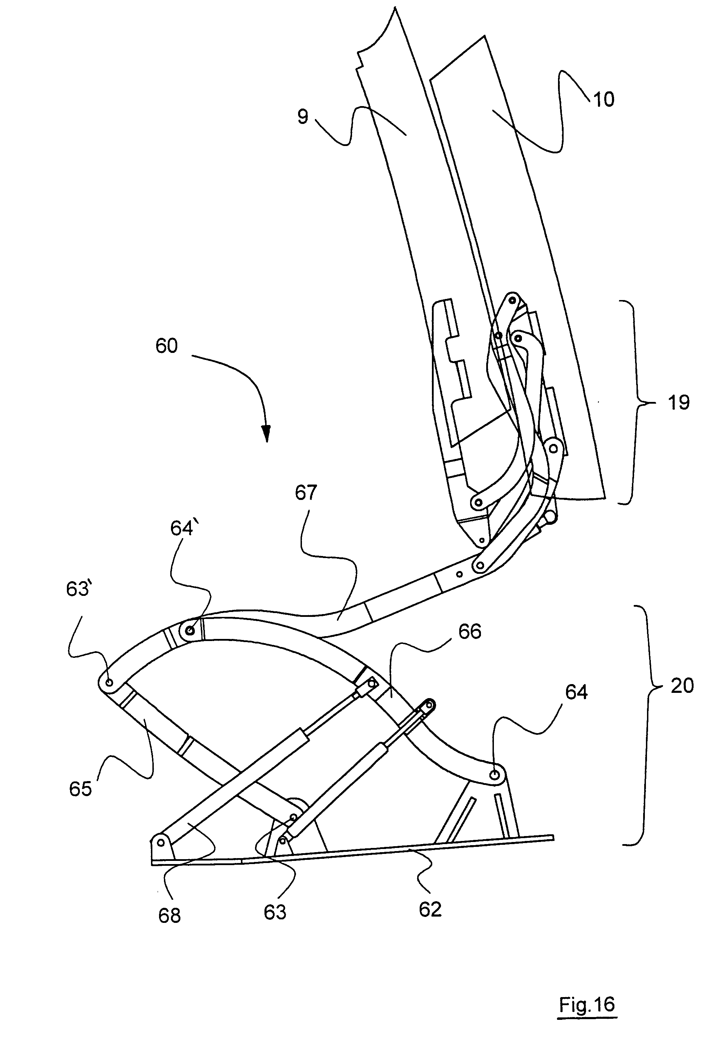

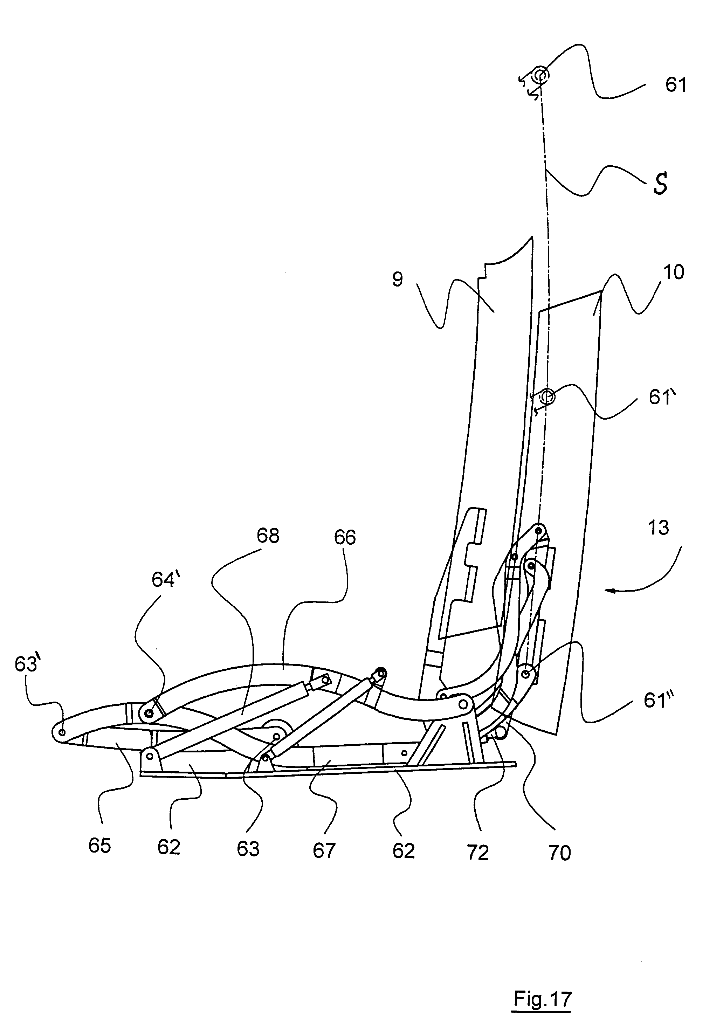

Die Seitenansichten gemäß Fig. 14 bis 17 verdeutlichen, daß der Schwenkantrieb 19 im Bereich des Hauptschwenklagers 61 dachseitig über einen Verbindungshebel 70 und eine an der Stützschwinge 67 angelenkte Schub-Zug-Stange 71 mit dem hinteren Dachteil 10 und dem vorderen Dachteil 9 zusammenwirkt. Bei der Öffnungsbewegung (bzw. bei der Schließbewegung in umgekehrter Bewegungsfolge) werden die Dachteile 9 und 10 mittels der Gelenkverbinder 13 in einer ersten Bewegungsphase (ähnlich Fig. 3) über den Schwenkantrieb 19 bzw. dessen Hydraulikzylinder 72 und die Schub-Zug-Stange 71 bis in die Packstellung (Fig. 15) bewegt und danach kann die gesamte Dachkonstruktion unter Wirkung des Absenkantriebes 20 bis in die untere Ablagestellung eingeschwenkt werden (Fig. 16, Fig. 17). In Fig. 17 sind die jeweiligen Lagen des Hauptschwenklagers 61,61',66'' dargestellt, so daß als Bewegungsbahn eine Einschwingkurve S der Dachkonstruktion deutlich wird. Diese Einschwingkurve S wird entsprechend der Wirkung der Stützbaugruppe 60 und deren als Steuerstangen wirksamen Bauteile durchlaufen. Mit geringem konstruktivem Aufwand kann diese Bewegungsbahn S an Bewegungsräume in Karosserien unterschiedlicher Fahrzeuge angepaßt werden.

In einer weiteren Ausführungsform der Antriebskonstruktion ist denkbar, die freitragende Stützbaugruppe 60 zumindest bereichsweise auf ihrer Bewegungsbahn S mit einem Führungselement (nicht dargestellt) so zu koppeln, daß nachteilige Querbewegungen der Dachkonstruktion beim Öffnungs- bzw. Schließvorgang vermieden sind.

## Patentansprüche

1. Cabriolet-Fahrzeug mit einer in Schließstellung mit einem vorderen Windschutzscheibenrahmen (3) verbundenen und im wesentlichen waagerecht zu einem rückwärtigen Dachbereich (4; 4') hin verlaufenden Dachschale (6), die zwei in Fahrzeugquerrichtung geteilten und über randseitige Gelenkverbinder (13, 14) verbundenen Dach-Teilstücken (9, 10) aufweist, die in eine den Fahrzeuginnenraum (7) bereichsweise freigebende Öffnungsstellung verlagerbar sind, **dadurch gekennzeichnet, daß** nur die beiden vor dem als festes Karosserieteil ausgebildeten rückwärtigen Dachbereich (4) befindlichen Teilstücke (9, 10) eine am hinteren Dach-Teilstück (10) angreifende Antriebseinheit (15) aufweisen, damit die beiden Teilstücke (9, 10) beim Öffnungsvorgang zunächst gemeinsam entgegen der Fahrtrichtung hochschwenkbar und danach in eine annähernd vertikale Packstellung hinter die Fondsitze (17) absenkbar sind.

2. Cabriolet-Fahrzeug nach Anspruch 1, **dadurch gekennzeichnet, daß** die beiden Dach-Teilstücke (9, 10) in der annähernden Vertikalstellung in eine parallele Hintereinanderlage verschwenkt sind.

3. Cabriolet-Fahrzeug nach Anspruch 1 oder 2, **dadurch gekennzeichnet, daß** die Antriebseinheit (15) für die beiden Dach-Teilstücke (9, 10) von einem im Nahbereich des hinteren Dach-Teilstückes (10) befindlichen Schwenkantrieb (19) und einem karosserieseitig abgestützten Absenkantrieb (20) gebildet ist.

4. Cabriolet-Fahreug nach einem der Ansprüche 1 bis 3, **dadurch gekennzeichnet, daß** die Bauteile des Schwenkantriebes (19) beim Öffnungsvorgang zum Absenkantrieb (20) hin verlagerbar sind.

5. Cabriolet-Fahrzeug nach einem der Ansprüche 1 bis 4, **dadurch gekennzeichnet, daß** der am rückwärtigen Dach-Teilstück (10) angreifende Schwenkantrieb (19) mit einem Stützlagerteil (21) ausgebildet ist, an dem sowohl ein zum hinteren Dach-Teilstück (10) hin gerichtete Antriebsgestängeteile (22) aufweisendes Antriebsorgan (23) als auch eine das Stützlagerteil (21) bei der Absenkbewegung abstützende Führungsbaugruppe (25) vorgesehen sind.

6. Cabriolet-Fahrzeug nach einem der Ansprüche 1 bis 5, **dadurch gekennzeichnet, daß** der Schwenkantrieb (19) einen Hydraulikzylinder (24) als Antriebsorgan (23) aufweist, dessen Kolbenstange (26) an einem mit dem hinteren Dach-Teilstück (10) verbundenen und am Stützlagerteil (21) ein Schwenkgelenk (27) bildenden Umlenkhebel (28) angreift.

7. Cabriolet-Fahrzeug nach einem der Ansprüche 1 bis 6, **dadurch gekennzeichnet, daß** am Stützlagerteil (21) eine von einem Verbindungsgelenk (29) zu dem jeweiligen Gelenkverbinder (13) der beiden Dach-Teilstücke (9, 10) hin verlaufende Winkelstrebe (30) abgestützt ist.

8. Cabriolet-Fahrzeug nach einem der Ansprüche 1 bis 7, **dadurch gekennzeichnet, daß** am Stützlagerteil (21) eine zum Absenkantrieb (20) gerichtete und mit der Führungsbaugruppe (25) ein gemeinsamenes Schwenkgelenk (33) bildende Schwingstange (34) angreift.

9. Cabriolet-Fahrzeug nach einem der Ansprüche 1 bis 8, **dadurch gekennzeichnet, daß** der Absenkantrieb (20) einen einerseits in einem Karosserie-Hauptlager (35) abgestützten und andererseits an der zum Stützlagerteil (21) des Schwenkantriebs (19) gerichteten Schwingstange (34) angreifenden Hydraulikzylinder (32) als Antriebsorgan (31) aufweist.

10. Cabriolet-Fahrzeug nach Anspruch 9, **dadurch gekennzeichnet, daß** die Schwingstange (34) über eine an deren antriebsseitigem Ende angelenkte Schwenkstütze (37) mit dem karosserieseitigen Hauptlager (35) verbunden ist.

11. Cabriolet-Fahrzeug nach einem der Ansprüche 1 bis 11, **dadurch gekennzeichnet, daß** die Führungsbaugruppe (25) mit einer sich im heckseitigen Karosseriebereich erstreckenden Führungsprofilstrebe (39) versehen ist, die mit einem am Stützlagerteil (21) vorgesehenen Gegenglied (40) nach Art einer Kulissenführung zusammenwirkt.

12. Cabriolet-Fahrzeug nach Anspruch 11, **dadurch gekennzeichnet, daß** die Führungsprofilstrebe (39) eine bogenförmige Bewegungsbahn (G) definiert.

13. Cabriolet-Fahrzeug nach einem oder mehreren der Ansprüche 1 bis 4, **dadurch gekennzeichnet, daß** die Antriebseinheit (15;16) im Bereich des Absenkantriebes (20) mit einer freitragenden Stützbaugruppe (60) versehen ist, die im Bereich des dachseitigen Schwenkantriebes (19) am hinteren Dach-Teilstück (10) über ein Hauptschwenklager (61) angreift.

14. Cabriolet-Fahrzeug nach Anspruch 13, **dadurch gekennzeichnet, daß** die Stützbaugruppe (60) mit einer Führungsschwinge (65) und einer Antriebsschwinge (66) versehen ist, die jeweils über Gelenkverbinder (63,64) an einem karosseriefesten Halteteil (62) abgestütz sind und anderenends über Gelenkverbinder (63',64') an einer die Dachteile tragenden Stützschwinge (67) angreifen.

15. Cabriolet-Fahrzeug nach Anspruch 13 oder 14, **dadurch gekennzeichnet, daß** an der Antriebsschwinge (66) als Antriebsorgan ein Hydraulikzylinder (68) angreift.

16. Cabriolet-Fahrzeug nach einem der Ansprüche 13 bis 15, **dadurch gekennzeichnet, daß** im Bereich zwischen der Antriebsschwinge (66) und dem karosseriefesten Halteteil (62) ein das Gewicht der Dachbaugruppe aufnehmendes Dämpfungselement in Form einer Gasdruckfeder (69) vorgesehen ist.

17. Cabriolet-Fahrzeug nach einem der Ansprüche 10 bis 16, **dadurch gekennzeichnet, daß** der Schwenkantrieb (19) über einen im Bereich des Hauptschwenklagers (61) dachseitig angreifenden Verbindungshebel (70) und eine an der Stützschwinge (67) angelenkte Schub-Zug-Stange (71) mit der zwischen hinterem Dachteil (10) und vorderem Dachteil (9) vorgesehenen Gelenkverbinder-Baugruppe (13) zusammenwirkt.

18. Cabriolet-Fahrzeug nach einem der Ansprüche 13 bis 17, **dadurch gekennzeichnet, daß** die Stützbaugruppe (60) auf ihrer Bewegungsbahn zumindest bereichsweise mit einem stabilisierenden Führungselement gekoppelt ist.

## Claims

1. A convertible vehicle with a roof shell (6) which, in the closed position, is connected to a front windscreen frame (3) and which extends substantially horizontally to a rear roof area (4, 4') and which has, divided in the cross-sectional direction of the vehicle, two partial roof pieces (9, 10) connected via marginal articulating connectors (13, 14) and which can be moved into an open position which at least exposes part of the vehicle interior (7), **characterised in that** only the two parts (9, 10) which are disposed in front of the rear roof area (4) which is constructed as a fixed bodywork part have a drive unit (15) engaging the rear roof part (10) so that both parts (9, 10) can, upon opening, be pivoted upwardly jointly against the direction of travel and then lowered into a substantially vertical packed-away position behind the rear seats (17).

2. A convertible vehicle according to claim 1, **characterised in that** the two roof parts (9, 10), in the approximately vertical position, are pivoted into a parallel and serial position.

3. A convertible vehicle according to claim 1 or 2, **characterised in that** the drive unit (15) for the two roof parts (9, 10) consists of a pivoting drive (19) disposed close to the rear roof part (10) and a lowering drive (20) braced on the bodywork.

4. A convertible vehicle according to one of claims 1 to 3, **characterised in that** the components of the pivoting drive (19) are adapted for displacement towards the lowering drive (20) during the opening process.

5. A convertible vehicle according to one of claims 1 to 4, **characterised in that** the pivoting drive (19) engaging the rear roof part (10) is constructed with a thrust bearing part (21) on which there are both a drive means (23) comprising drive linkage parts (22) directed towards the rear roof part (10) and also a guide assembly (25) which supports the thrust bearing part (21) during the lowering movement.

6. A convertible vehicle according to one of claims 1 to 5, **characterised in that** the pivoting drive (19) has an hydraulic cylinder (24) as its drive means (23) and the piston rod (26) of which engages a reversing lever (28) connected to the rear roof part (10) and forming a pivot joint (27) on the support bearing part (21).

7. A convertible vehicle according to one of claims 1 to 6, **characterised in that** there is on the support bearing part (21) an angled strut (30) extending from one connecting joint (29) to whichever is the appropriate articulating joint (13) on the two roof parts (9, 10).

8. A convertible vehicle according to one of claims 1 to 7, **characterised in that** on the support bearing part (21) there is a swinging rod (34) directed towards the lowering drive (20) and forming a common pivoting joint (33) together with the guide assembly (25).

9. A convertible vehicle according to one of claims 1 to 8, **characterised in that** the lowering drive (20) comprises as a drive member (31) a hydraulic cylinder (32) supported at one end in a main bearing (35) on the bodywork and at the other on the swinging rod (34) which is directed towards the support bearing part (21) of the pivoting drive (19).

10. A convertible vehicle according to claim 9, **characterised in that** the swinging rod (34) is connected to the main bearing (35) on the bodywork by a pivoting brace (37) articulated at its drive end.

11. A convertible vehicle according to one of claims 1 to 10, **characterised in that** the guide assembly (25) has, extending in the rear part of the bodywork, a guide section strut (39) which co-operates in the manner of a connecting link guide with a mating member (40) provided on the support bearing part (21).

12. A convertible vehicle according to claim 11, **characterised in that** the guide section strut (39) defines an arcuate movement path (G).

13. A convertible vehicle according to 1 or more of claims 1 to 4, **characterised in that** the drive unit (15; 16) is in the region of the lowering drive (20) provided with a freely supported bracing assembly (60) which, in the region of the roof end of the pivoting drive (19) engages the rear roof part (10) via a main pivot bearing (61).

14. A convertible vehicle according to claim 13, **characterised in that** the bracing assembly (60) is provided with a guide arm (65) and a drive swinging arm (66) which are respectively braced via articulating connectors (63, 64) to a retaining part (62) rigid with the bodywork while at the other end, via articulating connectors (63'; 64') they engage a supporting swinging arm (67) which supports the roof part.

15. A convertible vehicle according to claim 13 or 14, **characterised in that** as a drive means, a hydraulic cylinder (68) engages the drive swinging arm (67).

16. A convertible vehicle according to one of claims 13 to 15, **characterised in that** in the region between the drive swinging arm (66) and the retaining part (62) rigid with the body there is accommodating the weight of the roof assembly a damping element in the form of a gas pressure spring (69).

17. A convertible vehicle according to one of claims 10 to 16, **characterised in that** the pivoting drive (19) co-operates with the articulating connection assembly (13) provided between rear roof part (10) and front roof part (9) via a push-pull rod (71) articulated on the bracing swinging arm (67) and a connecting lever (20) which engages the roof in the region of the main pivot bearing (61).

18. A convertible vehicle according to one of claims 13 to 17, **characterised in that** the bracing assembly (60) is coupled to a stabilising guide element over at least portions of its movement part.

## Revendications

1. Véhicule convertible comportant une coquille de toit (6), reliée en position de fermeture au châssis avant du pare-brise (3) et qui est essentiellement dirigée horizontalement vers la zone arrière du toit (4, 4'), cette coquille ayant deux parties de toit (9, 10) divisées dans la direction transversale du véhicule en étant reliées par des liaisons articulées (13, 14) situées du côté du bord, et ces deux parties de toit peuvent être déplacées dans une position d'ouverture libérant des zones de l'intérieur (7) du véhicule,
**caractérisé en ce que**
seulement les deux parties de toit (9, 10) qui se trouvent toutes deux devant la zone arrière de toit (4) réalisée comme partie fixe de la carrosserie, comportent une unité d'entraînement (15) agissant sur la partie arrière de toit (10), pour que lors de l'opération d'ouverture, les deux parties (9, 10) soient tout d'abord relevées en commun dans la direction opposée à la direction de circulation du véhicule, puis abaissées dans une position de rangement, sensiblement verticale, derrière les sièges arrière (17).

2. Véhicule convertible selon la revendication 1,
**caractérisé en ce que**
dans la position sensiblement verticale les deux parties de toit (9, 10) sont basculées dans une position parallèle l'une derrière l'autre.

3. Véhicule convertible selon les revendications 1 ou 2,
**caractérisé en ce que**
l'unité d'entraînement (15) est formée pour les deux parties de toit (9, 10) par un entraînement de basculement (19) se trouvant à proximité de la partie arrière de toit (10) et d'un entraînement d'abaissement (20) qui s'appuie sur la carrosserie.

4. Véhicule convertible selon l'une quelconque des revendications 1 à 3,
**caractérisé en ce que**
les pièces de l'entraînement de basculement (19) sont déplacées vers l'entraînement d'abaissement (20) lors de l'opération d'ouverture.

5. Véhicule convertible selon l'une quelconque des revendications 1 à 4,
**caractérisé en ce que**
l'entraînement de basculement (19) relié à la partie arrière (10) du toit comporte une pièce de palier d'appui (21) munie à la fois d'un organe d'entraînement (23) ayant une tringle d'entraînement (22) dirigée vers la partie de toit arrière (10), et un ensemble de guidage (25) soutenant la pièce de palier d'appui (21) lors de son mouvement d'abaissement.

6. Véhicule convertible selon l'une quelconque des revendications 1 à 5,
**caractérisé en ce que**
l'entraînement de basculement (19) comporte comme organe d'entraînement (23) un vérin hydraulique (24) dont la tige de piston (26) agit sur un levier de renvoi (28) relié à la partie arrière de toit (10) et formant une articulation de basculement (27) sur la pièce de palier d'appui (21).

7. Véhicule convertible selon l'une quelconque des revendications 1 à 6,
**caractérisé en ce qu'**
une pièce coudée (30) partant d'une articulation de liaison (29) vers la liaison articulée respective (13) des deux parties de toit (9, 10) est appuyée sur la pièce de palier d'appui (21).

8. Véhicule convertible selon l'une quelconque des revendications 1 à 7,
**caractérisé en ce qu'**
une bielle (34) formant avec l'ensemble de guidage (25), une articulation de basculement commune (33) agit sur la pièce de palier d'appui (21) en étant dirigée vers l'entraînement d'abaissement (20).

9. Véhicule convertible selon l'une quelconque des revendications 1 à 8,
**caractérisé en ce que**
l'entraînement d'abaissement (20) comporte comme organe d'entraînement (31) un vérin hydraulique (32 ) appuyé d'un côté sur le palier principal (35) de la carrosserie, et agissant de l'autre côté sur la bielle (34) dirigée vers le palier d'appui (21) de l'entraînement de basculement (19).

10. Véhicule convertible selon la revendication 9,
**caractérisé en ce que**
la bielle (34) est reliée au palier principal (35) du côté de la carrosserie par un appui de basculement (37) articulé à son autre extrémité du côté de l'entraînement.

11. Véhicule convertible selon l'une quelconque des revendications 1 à 10,
**caractérisé en ce que**
l'ensemble de guidage (25) est muni d'une entretoise profilée de guidage (39) qui s'étend dans la zone arrière de la carrosserie, pour coopérer avec une pièce complémentaire (40) prévue sur la pièce de palier d'appui (21) à la manière d'un guidage par coulisse.

12. Véhicule convertible selon la revendication 11,
**caractérisé en ce que**
l'entretoise profilée de guidage (39) définit une trajectoire cintrée (G).

13. Véhicule convertible selon l'une quelconque des revendications 1 à 4,
**caractérisé en ce que**
l'unité d'entraînement (15, 16) comporte au niveau de l'entraînement d'abaissement (20) un ensemble d'appui (60) en porte-à-faux, qui au niveau de l'entraînement de basculement (19) du côté du toit, agit sur la partie arrière de toit (10) par l'intermédiaire d'un palier de basculement principal (61).

14. Véhicule convertible selon la revendication 13,
**caractérisé en ce que**
l'ensemble d'appui (60) est muni d'une bielle de guidage (65) et d'une bielle d'entraînement (66) appuyées respectivement par une liaison articulée (63, 64) à une pièce de fixation (62) solidaire de la carrosserie, et par l'autre extrémité, par une liaison articulée (63', 64') à une bielle d'appui (67) portant les parties de toit.

15. Véhicule convertible selon les revendications 13 ou 14,
**caractérisé en ce que**
l'organe d'entraînement de la bielle d'entraînement (66) est un vérin hydraulique (68).

16. Véhicule convertible selon l'une quelconque des revendications 13 à 15,
**caractérisé en ce que**
dans la zone comprise entre la bielle d'entraînement (66) et la pièce de fixation (62) solidaire de la carrosserie, il est prévu un élément amortisseur sous la forme d'un ressort à gaz (69) pour recevoir le poids de l'ensemble du toit.

17. Véhicule convertible selon l'une quelconque des revendications 10 à 16,
**caractérisé en ce que**
l'entraînement de basculement (19) coopère avec l'ensemble de liaison articulé (13) prévu entre la partie arrière (10) et la partie avant (9) du toit, par l'intermédiaire d'un levier de liaison (70) relié du côté du toit au niveau du palier de basculement principal (61) et par une tige de poussée/traction (71) articulée à la bielle d'appui (67).

18. Véhicule convertible selon l'une quelconque des revendications 13 à 17,
**caractérisé en ce que**
l'ensemble d'appui (60) est couplé sur sa trajectoire au moins par zones avec un élément de guidage stabilisant.
